# EUROPEAN PATENT SPECIFICATION

(11) **EP 3 578 435 B1**
(45) Date of publication and mention of the grant of the patent: **29.03.2023**
(21) Application number: 19178410.7
(22) Date of filing: 05.06.2019
(51) Int. Cl.: B61D 17/16

(54) **RAIL-MOUNTED VEHICLE HAVING PASSENGER EMERGENCY ESCAPE ROOF HATCH**
SCHIENENMONTIERTES FAHRZEUG MIT INSASSENNOTAUSGANGDACHLUKE
VÉHICULE MONTÉ SUR RAIL DOTÉ D'UNE TRAPPE DE TOIT D'ÉVACUATION D'URGENCE DES PASSAGERS

(30) Priority: 05.06.2018 GB 201809162
(43) Date of publication of application: 11.12.2019
(73) Proprietor: Hitachi Rail Ltd., London, Greater London EC4M 7AW (GB)
(72) Inventor: WOOLLEY, Martin, London, Greater London EC1N 2PB (GB); TAKEUCHI, Yuya, London, Greater London EC1N 2PB (GB)
(74) Representative: Mewburn Ellis LLP

(56) References cited:
- EP-A1- 1 623 902
- EP-A1- 2 119 613
- EP-A2- 0 094 257
- JP-A- 2005 349 852
- US-A1- 2010 107 495
- Anonymous: "Train door emergency egress and access and emergency evacuation procedures", Independent Transport Safety & Reliability Regulator (ITSRR), 1 November 2004 (2004-11-01), XP055708542, Retrieved from the Internet: URL:http://apmstandards.org/Linked%20Docum ents/TrainDoorEgress_Ingress 1!.pdf [retrieved on 2020-06-24]

## Description

### Field of the Present Disclosure

The present disclosure relates to a passenger-carrying, rail-mounted vehicle having a roof hatch suitable for passenger emergency escape therethrough.

### Background

In an emergency, such as a vehicle collision or the derailment of a rail-mounted vehicle, or in extreme wind conditions, a vehicle may overturn and fall onto its side. If a vehicle has overturned, it is often important for passengers of the vehicle to be able to leave the vehicle easily and efficiently for safety reasons, for example to avoid a fire in the vehicle.

However, in general, there is no dedicated emergency escape route for passengers to leave such an overturned vehicle. On older trains, passengers may attempt to break windows in the side walls of the vehicle using a break hammer. However, a break hammer may not be easily accessible to a passenger needing to escape. For example, in the event of fire, a passenger may not be able to reach a break hammer safely. Therefore, the risk to passenger injury may be increased as the passenger attempts to find the break hammer in an emergency situation. Moreover modern trains have windows made from laminated and toughened glass which is extremely difficult to break. These windows are intended to contain passengers inside the vehicle, as previous accidents have shown that there is also a risk of passengers falling out from the train during a crash.

On some modern trains passengers can pull an emergency door release handle to force open side passenger doors in order to escape from the vehicle. Such door release handles are typically operated by a Bowden cable connecting the handle to a lock, wherein the Bowden cable is required to be in tension in order to manually release the lock. However, if the vehicle is overturned and fallen onto its side, the Bowden cable may not be pulled taught and would therefore not function to release the lock for the side passenger doors. Some trains are pressure sealed which again makes the emergency release handle extremely difficult to operate.

Even if passengers are able to unlock the side passenger doors, the weight and/or plug force of the side passenger doors may prevent passengers from being able to manually open them. Further, when the vehicle is overturned onto its side, the side passenger doors are at a height of around 2.8m so usually out of reach of the passengers.

In the case of overhead-line electrified rail-mounted vehicles, even if passengers are able to reach the side passenger doors and overcome their weight and plug force in order to open the doors, electrified overhead lines pose a significant risk to passengers escaping from the side passenger doors when the rail-mounted vehicle has overturned onto its side. Isolation of the overhead lines such that they are no longer electrified takes time which further increases the risk of passenger harm, for example from a fire in the vehicle.

Some train formations may be formed of coupled passenger-carrying elements, for example a train comprising coupled trains/carriages. These vehicles sometimes do not permit passengers to walk between the coupled passenger-carrying elements. Thus it is also desirable to provide routes for passenger emergency escape which do not rely on passengers being able to transfer between coupled elements.

JP 2005 349852 proposes a rolling stock having a roof opening path through which a person can ascend on or descend from a roof of the rolling stock.

### Summary

It is an aim of the present disclosure to provide a route for passenger emergency escape from a vehicle, particularly when the vehicle has overturned onto its side. Further aims are to provide a route for passenger emergency escape that permits passengers to safely and efficiently leave the overturned vehicle such that the risk of injury or harm to the passengers is reduced, and to provide a route that does not depend on passengers being able to transfer between coupled passenger-carrying elements of the vehicle.

In a first aspect according to claim 1, the present disclosure provides a passenger-carrying, rail-mounted vehicle having a roof hatch in a roof of the vehicle for passenger emergency escape therethrough.

In an emergency situation in which the vehicle has overturned onto its side, passengers of the vehicle are able to easily reach the roof hatch in order to escape therethrough. This is because when the vehicle has overturned, the roof of the vehicle is no longer above standing height of the passengers, but instead forms a side of the overturned vehicle such that the roof hatch is at a height easily reached by passengers. Accordingly, passengers are able to safely and efficiently escape from the vehicle. The passengers are also able to escape from the overturned vehicle without coming into proximity with any electrified overhead lines which may be used to power the vehicle, thus further reducing the risk of passenger injury from these lines.

Features, including some optional features, of the first aspect of the disclosure will now be set out. These are applicable singly or in any combination with the first aspect unless otherwise stated.

The rail-mounted vehicle may have a plurality of the roof hatches. The rail-mounted vehicle may be a train or an element (e.g. an engine or a carriage) of a train. The rail-mounted vehicle may be formed of a plurality of coupled passenger-carrying elements, and each passenger-carrying element may have a respective roof hatch in a roof thereof for passenger emergency escape therethrough. Accordingly, even if the rail-mounted vehicle comprises a plurality of coupled passenger-carrying elements wherein passenger walk-through between the coupled elements is not permitted, passengers are able to easily, safely and efficiently escape from any of the coupled passenger-carrying elements.

The roof hatch includes a remotely-controlled locking device having a closed state preventing opening of the roof hatch and a released state allowing opening of the roof hatch. The vehicle further has tr a control system configured to control the operation of the remotely-controlled locking device, wherein the remotely-controlled locking device remains in its closed state until receipt of a release signal generated by the control system. As the roof hatch is locked in the closed state until receipt of the release signal from the control system, passengers are prevented from opening the roof hatch in a non-emergency situation, e.g. by inadvertent attempted operation of the remotely-controlled locking device. Accordingly, unnecessary disruption to the running of the vehicle may be prevented.

The rail-mounted vehicle may further comprise an emergency power supply for use if a main power supply to the vehicle is lost. The emergency power supply may power the remotely-controlled locking device and the control system.

The rail-mounted vehicle is powered from a track-side overhead electrical power line. The control system is configured such that it suppresses the generation of the release signal until it receives confirmation that power in the power line has been cut.

The rail-mounted vehicle has a user interface configured to allow interaction between a driver or guard of the vehicle and the control system, wherein the release signal is generated by the control system upon receipt thereby of an unlock signal from the user interface system, the unlock signal indicating that the driver or guard allows transition of the remotely-controlled locking device from its closed state into its released state. Advantageously, a driver or guard of the vehicle is therefore able to control whether the roof hatch is unlocked. Thus, passengers are unable to open the hatch, for example in a non-emergency situation. Unnecessary disruption to the running of the vehicle can therefore be prevented. The rail-mounted vehicle typically receives power for all equipment inside the vehicle, including the user interface, from a primary energy source, such as a catenary, third rail or generator unit. In the event, the rail-mounted vehicle further comprises an emergency power supply, the emergency power supply may also power the user interface when the power supply from the primary source has failed.

In a second aspect according to claim 10, the present disclosure provides a passenger emergency escape roof hatch system for installing in a passenger-carrying vehicle, the system having the roof hatch and the control system of the first aspect. Thus, the passenger emergency escape roof hatch system for installing in a passenger-carrying vehicle, has a roof hatch for mounting in a roof of the vehicle, the roof hatch including a remotely-controlled locking device having a closed state preventing opening of the roof hatch and a released state allowing opening of the roof hatch, and a control system configured to control the operation of the remotely-controlled locking device, wherein the remotely-controlled locking device remains in its closed state until receipt of a release signal generated by the control system.

The rail-mounted vehicle is powered from a track-side overhead electrical power line. The control system is configured such that it suppresses the generation of the release signal until it receives confirmation that power in the power line has been cut.

The emergency escape roof hatch system further has a user interface configured to allow interaction between a driver or a guard of the vehicle and the control system, wherein the release signal is generated by the control system upon receipt of an unlock signal from the user interface, the unlock signal indicating that the driver or guard allows transition of the remotely-controlled locking device from its closed state to its released state.

Further features, including some further optional features, of the present disclosure will now be set out. These are applicable singly or in any combination with vehicle of the first aspect or with the system of the second aspect.

The control system may control the operation of the remotely-controlled locking device on the basis of measurement of an operational condition of the vehicle. Accordingly, the roof hatch may be unlocked when the measurement of the operational condition of the vehicle indicates there is an emergency, but remain locked when the measurement of the operation condition of the vehicle indicates that there is no emergency. Unnecessary disruption to the running of the vehicle is therefore prevented.

The control system may be a train management system (TMS). A TMS is an information system which provides data communication amongst equipment (such as traction convertor, brake system, signalling system, etc.) mounted on the train through a data network.

The remotely-controlled locking device may comprise a solenoid lock bolt. In the closed state, the solenoid lock bolt may be extended by a mechanical spring, and in the released state, the solenoid lock bolt may be energised to retract the solenoid lock bolt against the spring to allow opening of the roof hatch.

The control system may be configured such that it receives a measurement of the speed of the vehicle and the release signal is only generated if the measured speed is less than a predetermined speed. Accordingly, passengers may only escape through the roof hatch when the vehicle is travelling at a speed which is safe for passenger escape from the vehicle. The risk to passenger safety is therefore reduced. Further, the measurement of the speed may be received from already existent train measurement systems, such as a brake control system.

Further optional features of the present disclosure will now be set out. These are applicable singly or in any combination with vehicle of the first aspect or with the system of the second aspect.

In a vehicle having a plurality of the hatches (e.g. a train formed of a plurality of coupled passenger-carrying elements, each passenger-carrying element of the train having a respective roof hatch), the unlock signal from the user interface and the release signal generated by the control system may be in respect of all the roof hatches or in respect of only a selection of the hatches, e.g. the selection being under the control of the driver or guard.

The control system may be configured to command an emergency brake control to reduce the speed of the vehicle upon receipt by the control system of the unlock signal. Accordingly, if the driver or guard allows the roof hatch to be unlocked such that it may be opened, the vehicle automatically brakes so that the vehicle is travelling at a speed considered safe for passenger escape through the roof hatch.

The roof hatch may include a locally-controlled locking device (e.g. a manually-operable mechanical lock) having a closed state preventing opening of the roof hatch and a released state allowing opening of the roof hatch, wherein the locally-controlled locking device is movable into its released state by a passenger of the vehicle wanting to exit through the roof hatch, and the control system may be configured to trigger a prompt to the user interface upon detection of an attempt to move the locally-controlled locking device into its released state. In this way, a driver or guard of the vehicle is alerted to a passenger attempt to open the roof hatch, the attempt possibly indicating an emergency situation. The driver or guard is then able to take necessary steps to ensure passenger safety, i.e. by either allowing passengers to escape through the roof hatch (if the driver or guard considers there to be an emergency), or by preventing opening of the roof hatch (if the driver or guard considers there not to be an emergency).

The locally-controlled locking device may have a handle which is operable to move the locally-controlled locking device between its closed state and its released state, and a handle cover which is arranged such that the handle cover must be broken or removed by a passenger to permit operation of the handle. Optionally, the locally-controlled device may be configured such that breaking or removing the cover is detectable by the control system to trigger the prompt to the user interface.

In a vehicle having a plurality of the hatches (e.g. a train formed of a plurality of passenger-carrying coupled elements, each passenger-carrying element of the train having a respective roof hatch), the user interface may be configured to indicate which roof hatch has a locally-controlled locking device that is being attempted to be moved into its released state.

The prompt may request a user feedback from the user interface to the control system, the feedback being or including either the unlock signal indicating that the driver or guard allows transition of the remotely-controlled locking device from its closed state to its released state, or a prevention signal indicating that the driver or guard prevents transition of the remotely-controlled locking device from its closed state to its released state. Accordingly, the driver or guard can assess whether or not there is an emergency situation, and make a professional judgement to either allow or prevent opening of the roof hatch. Accordingly, unnecessary disruption to the running of the vehicle can be prevented.

The control system may be configured such that if it does not receive the user feedback from the user interface within a predetermined time period from the attempt to move the locally-controlled locking device to its released state, the control system generates the release signal. Accordingly, passengers are able to escape through the roof hatch even if the driver or guard is unable to respond to the prompt, for example if the driver or guard is injured or otherwise incapacitated.

The control system may further be configured such that if it does not receive the user feedback from the user interface within the predetermined time period from the attempt to move the locally-controlled locking device to its released state, the control system commands an emergency brake control to reduce the speed of the vehicle. In this way, the vehicle automatically brakes if no response is received from the driver or guard (i.e. because they are incapacitated and so unable to respond) so that the vehicle is travelling at a safe speed for passenger escape through the roof hatch.

Yet further optional features of the present disclosure will now be set out. These are applicable singly or in any combination with any aspect of the present disclosure.

The roof hatch may include a locally-controlled locking device (e.g. a manually-operable mechanical lock) having a closed state preventing opening of the roof hatch and a released state allowing opening of the roof hatch, wherein the locally-controlled locking device is movable into its released state by a passenger of the vehicle wanting to exit through the roof hatch. Accordingly, passengers are able to open the hatch themselves. Such a locally-controlled locking device may have a handle which is operable to move the locally-controlled locking device between its closed state and its released state, and a handle cover which is arranged such that the handle cover must be broken or removed by a passenger to permit operation of the handle.

The roof hatch may be hinged along a side thereof, and the hinged hatch may be configured to swing open towards an inside of the vehicle. In this way, any obstructions (such as trees etc.) outside of the vehicle will not prevent the hatch from opening in order for passengers to escape therethrough.

### Brief Description of the Drawings

Embodiments of the present disclosure will now be described by way of example with reference to the accompanying drawings in which:
Figure 1 shows a passenger train having a plurality of roof hatches for passenger emergency escape therethrough;
Figure 2 shows a roof hatch in an open position;
Figure 3 shows the roof hatch of Figure 2 in a closed position;
Figure 4 shows another view of the roof hatch of Figure 2 in the open position;
Figures 5A-5D schematically show the train of Figure 1 at various stages after a passenger attempt to open a roof hatch;
Figure 6 shows an alarm prompt displayed to a passenger or guard of the train of Figure 1 triggered by a passenger attempt to open a roof hatch;
Figure 7 shows a relay circuit of the control system of the train;
Figure 8 summarises digital output, relay and solenoid coil states for the circuit of Figure 7;
Figure 9 shows a flowchart of control logic of the control system; and
Figure 10 show a relay circuit of a variant control system of the train;
Figure 11 summarises the digital output, relay and solenoid coil states for the circuit of Figure 10; and
Figure 12 shows a flowchart of the control logic of the variant control system.

### Detailed Description and Further Optional Features

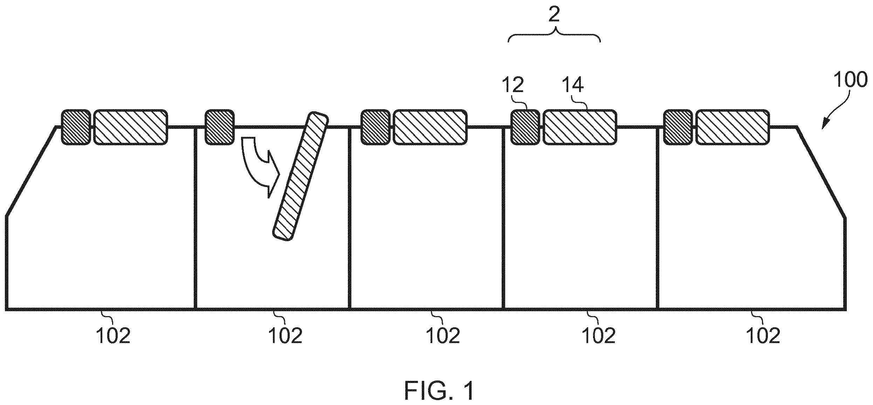

Figure 1 shows a passenger train 100 formed of a plurality of coupled carriages 102 and having a plurality of roof hatches 2. More particularly, each carriage 102 has a respective roof hatch 2 in its roof for passenger emergency escape therethrough, with each roof hatch including a hinged access panel 14 covering an escape opening and an associated control unit 12 for the panel. Accordingly, passengers can easily reach and escape through one of the roof hatches 2 if their carriage 102 has overturned and fallen onto its side.

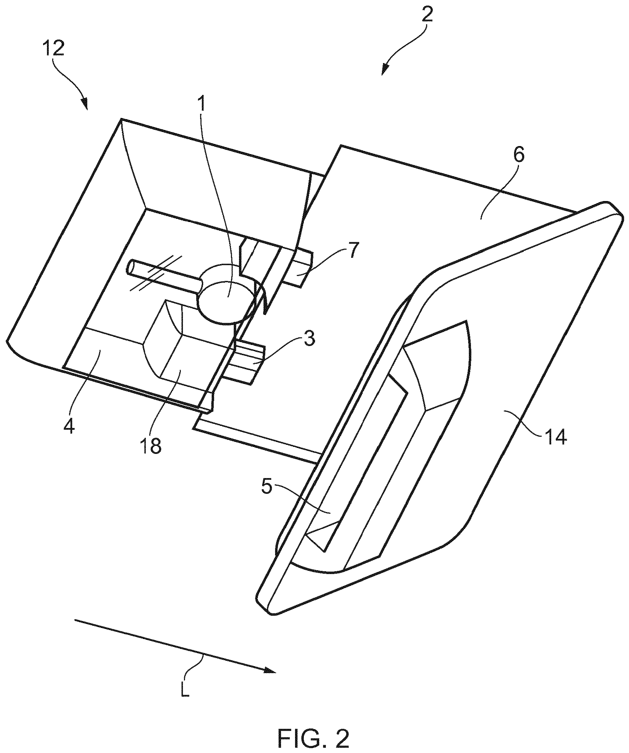

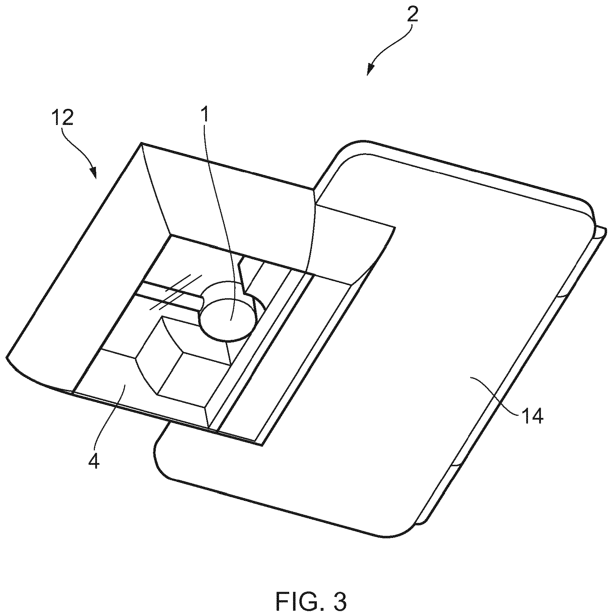

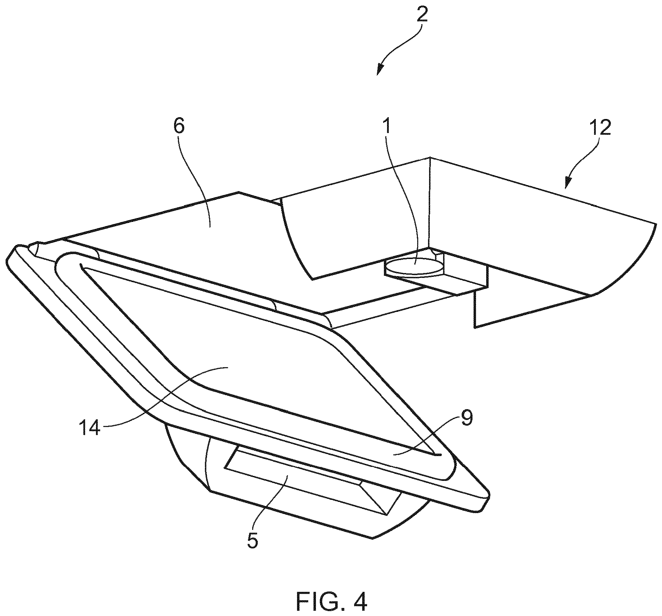

Figures 2-4 show more detail of one of the roof hatches 2 from the train 100 of Figure 1. Figure 2 is a view from below the roof hatch 2 with the hatch in an open position and an arrow L indicating the length direction of the carriage 102 in which the hatch is installed, Figure 3 is a view from below the roof hatch 2 with the hatch in a closed position, and Figure 4 is a different view from below the roof hatch 2 with the hatch in the open position.

The access panel 14 of the hatch 2 is hinged such that it can swing open towards an inside of its carriage 102 to allow passenger escape access through an opening 6 in the roof of the carriage (see Figures 2 and 4), and swing closed in the reverse direction to cover the opening 6 (see e.g. Figure 3). By swinging open inwardly, any obstructions (such as trees etc.) outside of the carriage 102 will not prevent the panel 14 from opening. The panel 14 is hinged along a side thereof such that its hinge pivot axis is perpendicular to the length direction L of the carriage 102. In this way, it is easier for passengers to overcome the weight of the panel 14 when opening the hatch with the carriage 102 overturned on its side, compared to if the panel 14 was hinged along a side parallel to the length direction of the carriage 102. This allows adoption of a strong and robust design for the hatch 2 as the panel 14 does not need to be especially lightweight. The panel 14 may be made from metal or reinforced plastic, for example. Also by having the hinge pivot axis of the panel 14 along a side that is perpendicular to the length direction L, clearance issues inside the vehicle (e.g. due to overhead luggage racks) can be avoided.

The control unit 12 for the roof hatch 2 includes a remotely-controlled locking device which can be electronically locked in a closed state preventing opening of the roof hatch 2, and unlocked in a released state allowing opening of the roof hatch 2. The remotely-controlled locking device is preferably a first lock bolt 3. In the closed state the first lock bolt is extended by a mechanical spring to fit into a pocket 5 formed in the access panel 14, and in the released state a solenoid is energised to retract the first lock bolt against the spring such that the bolt pulls out of the pocket 5 to allow opening of the roof hatch 2. A dedicated housing 18 within the control unit 12 contains the actuation mechanism (i.e. the spring and solenoid electronics) for operating the first lock bolt 3.

The control unit 12 also includes a locally-controlled locking device which has a closed state preventing opening of the access panel 14, and a released state allowing opening of the panel. As shown in Figure 2, the locally-controlled locking device can be a manually-operable mechanical second lock bolt 7 and an associated handle 1 which is operable to move the second lock bolt 7 between a closed state and a released state. More particularly, and similarly to the first lock bolt 3, in the closed state the second lock bolt 7 inserts into the pocket 5 of the access panel 14 to prevent the hatch 2 from opening, and in the released state the bolt 7 is pulled out of the pocket 5. In a variant of the roof hatch 2, the locally-controlled locking device may be integrated with the remotely-controlled locking device, for example by providing the hatch with a single lock bolt which has both a remotely-controlled electronic actuator and a locally-controlled manual actuator.

Under normal operating conditions when there is no emergency, both the remotely-controlled locking device and the locally-controlled locking device are in their closed states so that the roof hatch 2 is locked closed. Specifically, under such circumstances, the first 3 and the second 7 lock bolts are inserted into the pocket 5 of the access panel 14.

In an emergency, such as when the train 100 or a carriage 102 of the train, has overturned onto its side, the remotely controlled locking device and the locally-controlled locking device can be moved into their released states. Specifically, the solenoid of the first lock bolt 3 is energised to retract the solenoid lock bolt against the spring in order to remove the first lock bolt from the pocket 5 of the access panel 14, and the second lock bolt 7 is removed from the pocket by turning the handle 1. Thus the roof hatch 2 is able to swing open.

As shown in Figure 4, a rubber seal 9 is provided around the perimeter of the access panel 14 in order to form a seal with the roof of the carriage when the roof hatch 2 is in the closed position. This seal maintains cabin pressure inside the carriage and prevents water ingress.

To prevent inappropriate use of the second lock bolt 7, the handle 1 is covered by a handle cover 4. The handle cover 4 may be a transparent glass or plastic sheet marked with e.g. "BREAK IN EMERGENCY" and/or "PENALTY FOR IMPROPER USE" and arranged such that passengers must break or remove the cover 4 in order to access the handle 1.

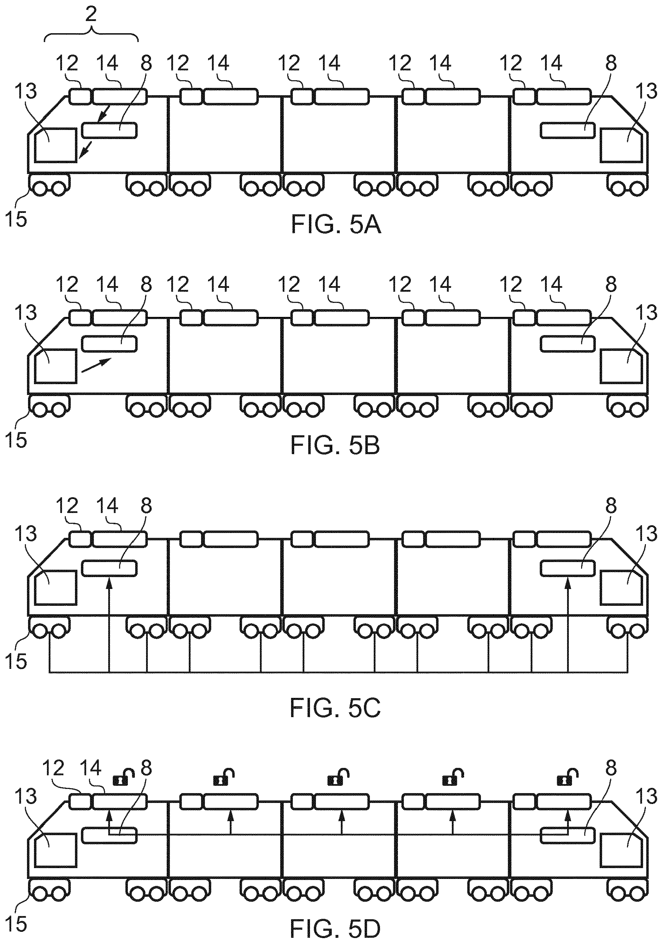

The train 100 has a control system 8 for controlling the operation of the roof hatches 2. Conveniently, the control system can be an integral part or an extension of a wider TMS. The control system 8 is configured to detect a passenger attempt to open any of the roof hatches 2. Specifically, the control system 8 may detect the breaking or removal any of the handle covers 4 using pressure sensors, proximity sensors etc. Alternatively or additionally, the control system 8 may detect attempts to move any of the handles 1. Figures 5A-5D schematically show the train 100 at various stages after the control system 8 has detected an attempt to move a locally-controlled locking device into its released state.

As shown in Figures 5A-5D, the train 100 further has a user interface 13 configured to allow interaction between a driver or guard of the train and the control system 8. The user interface may comprise a touch screen 10 in the driver's or guard's cab, for example. The control system 8, the user interface 13 and the roof hatches 2 together form a roof hatch system for installing in a train.

Figure 5A shows the control system 8 detecting a passenger attempt to move the locally-controlled locking device of one of the roof hatches 2 into its released state in order to open the roof hatch. Upon detection of an attempt to move the locally-controlled locking device into its released state, the control system 8 triggers a prompt to the user interface 13. The prompt requests user feedback from the user interface 13 to the control system 8.

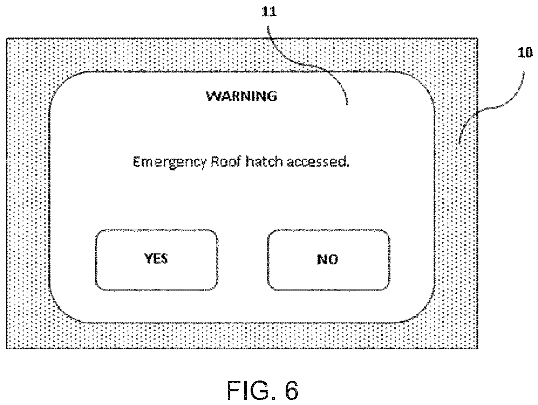

Specifically, as shown in Figure 6, a visual alarm prompt 11 can be displayed on a touch screen 10 of the user interface 13. The alarm prompt 11 requests input from the driver or the guard of the train 100, the input indicating whether the driver or guard accepts that the roof hatch should be unlocked because there is an emergency, or rejects that the roof hatch 2 should be unlocked, because there is no emergency. The alarm prompt 11 is a high priority message which is prominent on the touch screen 10 and only disappears once it has been responded to by the driver or guard. The visual alarm prompt may be accompanied by an audible warning signal. The driver's or guard's acceptance or rejection of the alarm prompt 11 by may be based on their own assessment of the situation, or may involve communicating with passengers via a call-for-aid passenger announcement system before providing the input to the alarm prompt 11.

In a train 100 having a plurality of roof hatches, as shown in Figures 1 and 5A-5D, the driver or guard may have the option to unlock all of the roof hatches, or only a selection of the roof hatches.

Referring to Figure 5B, the driver's or guard's response is sent as feedback from the user interface 13 to the control system 8. The feedback is either an unlock signal indicating that the driver or guard allows transition of the respective remotely-controlled locking device from its closed state to its released state, or a prevention signal indicating that the driver or guard prevents transition of the respective remotely-controlled locking device from its closed state to its released state.

If the feedback sent from the user interface 13 to the control system 8 is the unlock signal, the control system may command an emergency brake control to reduce the speed of the train 100 so that the train 100 slows to a speed at which it is safe for passengers to escape through a roof hatch 2.

The train 100 has one or more train speed detection devices 15 to detect its speed. For example, train speed is typically detected by taking axle speed readings measured by a brake control unit. Alternatively or additionally, the speed may be detected by measuring the rotation speed of the wheels. As shown in Figure 5C, the control system 8 can receive a measurement of the speed of the train detected by the train speed detection device 15 in such a way.

When the control system 8 receives the unlock signal from the user interface 13, the control system 8 sends a release signal to the remotely-controlled locking device(s) if the measured speed of the train 100 received by the control system 8 is less than a predetermined value. The predetermined value is a train speed under which it is considered safe for passenger escape through the hatches 2. The predetermined value may be 3km/hour, for example.

When the control system 8 receives the prevention signal from the user interface 13, the control system 8 does not generate the release signal.

If the control system 8 does not receive the unlock signal or the prevention signal from the user interface 13 within a predetermined period of time from a passenger attempt to move the locally-controlled locking device to its released state (i.e. from the control system's 8 detection of the breaking or removal of the handle cover 4), the control system 8 may command an emergency brake control to reduce the speed of the train 100. The control system 8 may also send the release signal to the remotely-controlled locking device when the measured speed of the train 100 received by the control system is less than the predetermined value.

As shown in Figure 5D, on receipt of the release signal the remotely-controlled locking device transitions from its closed state to its released state. The release signal may be in respect of all the hatches in order that they are all unlocked (e.g. as in Figure 5D), or in respect of only a selection of the hatches (e.g. as in Figure 1). The selection is under the control of the driver or guard by inputting through the user interface 13.

If the driver or guard accidently rejects hatch unlocking by inputting into the alarm prompt 11 that they reject the request to open the hatch 2, or does not respond within the predetermined period of time from a passenger attempt to move the locally-controlled locking device to its released state, the driver or guard may, at any time, manually transition the remotely-controlled locking device from its closed state to its released state through a menu on the touch screen 10. This option to manually transition the remotely-controlled locking device from its closed state to its released state does not require a passenger attempt to move the locally-controlled locking system into its released state. Accordingly, a driver or guard does not have to wait for a passenger to attempt to open the hatch 2 before unlocking the remotely-controlled locking device.

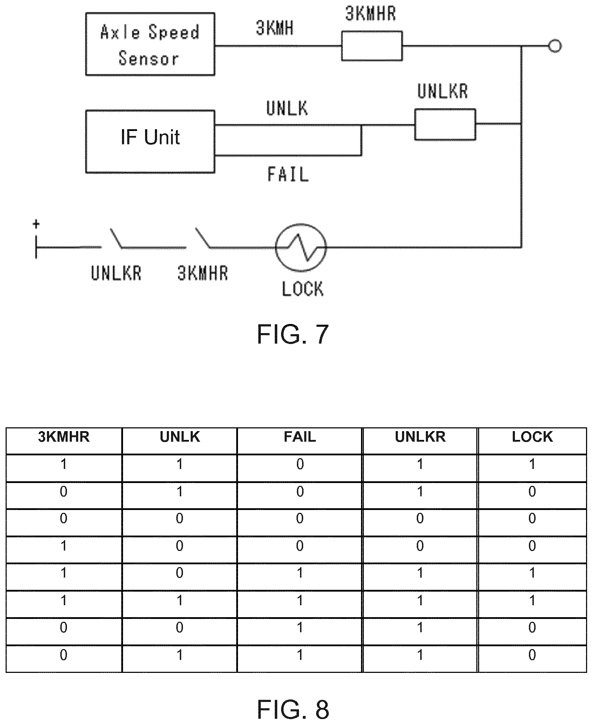

Figure 7 shows a relay circuit of the control system 8. A digital output 3KMH of an Axle Speed Sensor is input into a relay coil 3KMHR as the measured speed of the train. The digital output 3KMH is 1 if the measured speed of the train is less than the predetermined speed (i.e. less than 3km/h), and 0 if the measured speed of the train is greater than the predetermined speed. If the measured speed of the train is greater than the predetermined speed (i.e. the digital output 3KMH = 0), a relay contact 3KMHR is opened, whereas if the measured speed of the train is less than the predetermined speed (i.e. the digital output 3KMH =1), the relay contact 3KMHR is closed.

A digital output UNLK of an IF Unit corresponds to the unlock signal from the interface unit 13 indicating that the driver or guard allows transition of the remotely-controlled locking device from its closed state to its released state, a timeout signal if the driver or guard has not responded within a predetermined period of time to the alarm prompt 11 on the user interface 13, or a prevention signal from the interface unit 13 indicating that the driver or guard prevents transition of the remotely-controlled locking device from its closed state to its released state. The digital output UNLK = 1 if the feedback is the unlock signal or the timeout signal, and the digital output UNLK = 0 if the feedback is the prevention signal. The control system 8 is further configured to detect whether the interface unit 13 has malfunctioned. Specifically, the control system 8 is configured to detect if the interface unit 13 has not displayed the alarm prompt 11 despite the control system 8 detecting a passenger attempt to move the locally-controlled locking device into its released state; and/or if the interface unit 13 has failed to send the feedback despite the driver or guard responding to the alarm prompt 11. Thus a digital output FAIL of the IF Unit indicates whether the interface unit 13 has failed or not. In particular, the digital output FAIL = 0 if the interface unit 13 is working correctly, and the digital output FAIL = 1 if the interface unit 13 has malfunctioned.

The digital output FAIL and the digital output UNLK are input into a relay coil UNLKR. The output of the relay coil UNLKR = 0 resulting in a relay contact UNLKR being opened when the digital output UNLK = 0 and the digital output FAIL = 0. However, the output of the relay coil UNLKR = 1 resulting in the relay contact UNLKR being closed when the digital output UNLK = 1 and the digital output FAIL = 0, or when the digital output FAIL = 1.

When both the relay contact 3KMHR and the relay contact UNLKR are closed, the solenoid coil of the first lock bolt 3 is energised to retract the bolt and allow opening of the roof hatch 2 (LOCK = 1). However, if either the relay contact 3KMHR or the relay contact UNLKR is open, the solenoid coil is not energised and the first lock bolt 3 remains locked to prevent opening of the roof hatch 2 (LOCK = 0).

Figure 8 summarises the digital output, relay and solenoid coil states for the circuit of Figure 7. Whenever the train speed is not less than 3km/h, the remotely-controlled locking device remains locked (LOCK = 0). When the train speed is less than 3km/h, and if the interface unit 13 has malfunctioned, because this is a safety critical failure in itself, the remotely-controlled locking device is unlocked (LOCK = 1). On the other hand, when the train speed is less than 3km/h, and if the interface unit 13 has not malfunctioned, the locking or unlocking of the remotely-controlled locking device depends on the digital output UNLK.

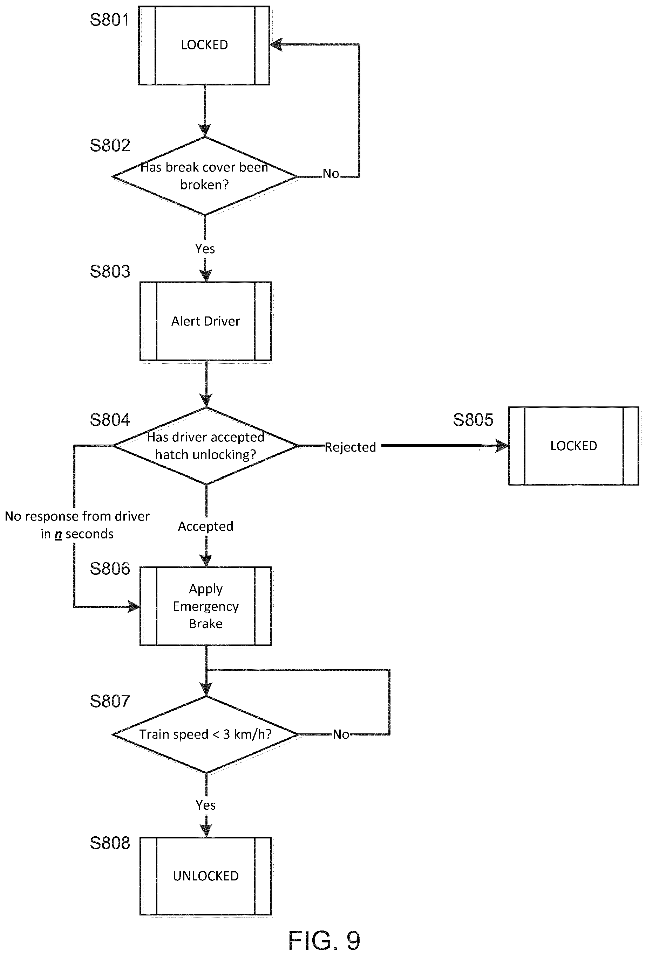

Figure 9 shows a flowchart of the control logic of the control system 8.

At S801, the remotely-controlled locking device is locked in its closed state, and opening of the hatch 2 is prevented.

At S802, the control system 8 detects whether or not an attempt to move the locally-controlled locking device has occurred. As an example, the control system 8 may be configured to detect if a handle cover 4 of the locally-controlled locking device has been broken or removed.

If there is no passenger attempt to move the locally-controlled locking device, the remotely-controlled locking device remains locked, and the control logic process returns to S801.

If there is a passenger attempt to move the locally-controlled locking device, the control logic process moves to S803. At S803, a prompt is triggered to the interface unit 13 of the train 100 and a driver or a guard is alerted. Specifically, the prompt requests user feedback from the interface unit 13 to the control system 8, the feedback either indicating that the driver or guard allows opening of the hatch 2, or indicating that the driver or guard rejects opening of the hatch 2.

At S804, the control system 8 detects whether user feedback has been received from the interface unit 13.

If user feedback is received by the control system 8, and the user feedback indicates that the driver or guard rejects the opening of the hatch 2, the control logic process moves to S805 and the remotely-controlled locking device remains locked.

If user feedback is received by the control system 8, and the user feedback indicates that the driver or guard allows the opening of the hatch 2, the control logic process moves to S806, and the control system 8 commands an emergency brake control to reduce the speed of the train 100. Otherwise, if the user feedback indicates that the driver or guard prevents the opening of the hatch, the control logic process moves to S805 and the remotely-controlled locking device remains locked in its closed state.

If no user feedback is received by the control system within a predetermined time from the passenger attempt to move the locally-controlled locking device, the control logic process also moves to S806, and the control system 8 commands an emergency brake control to reduce the speed of the train 100.

At S807, the control system receives a measurement of the speed of the train 100, and compares the measured speed of the train to a predetermined speed.

If the measured speed of the train is less than the predetermined speed, the control logic process moves to S808, the control system 8 generates the release signal, and the remotely-controlled locking device is unlocked such that the hatch 2 may be opened.

If the measured speed of the train is not less than the predetermined speed, S807 is repeated until the measured speed is less than the predetermined speed.

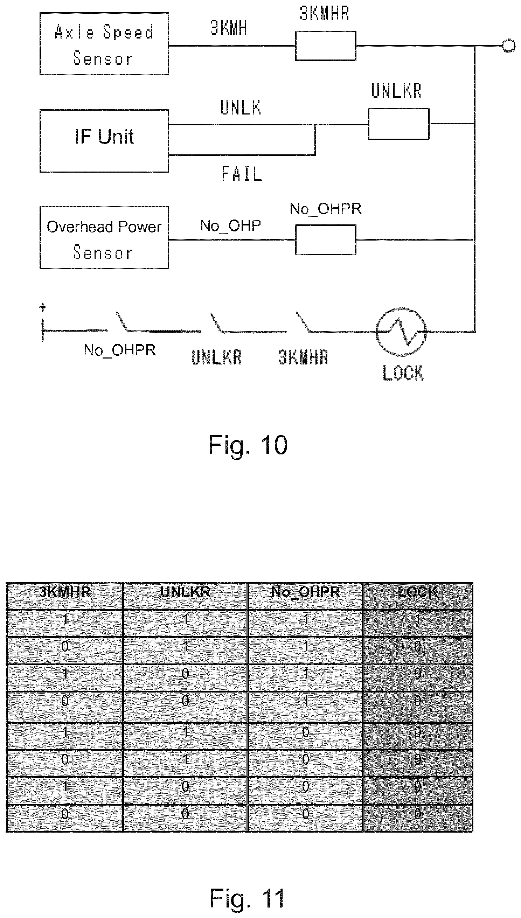

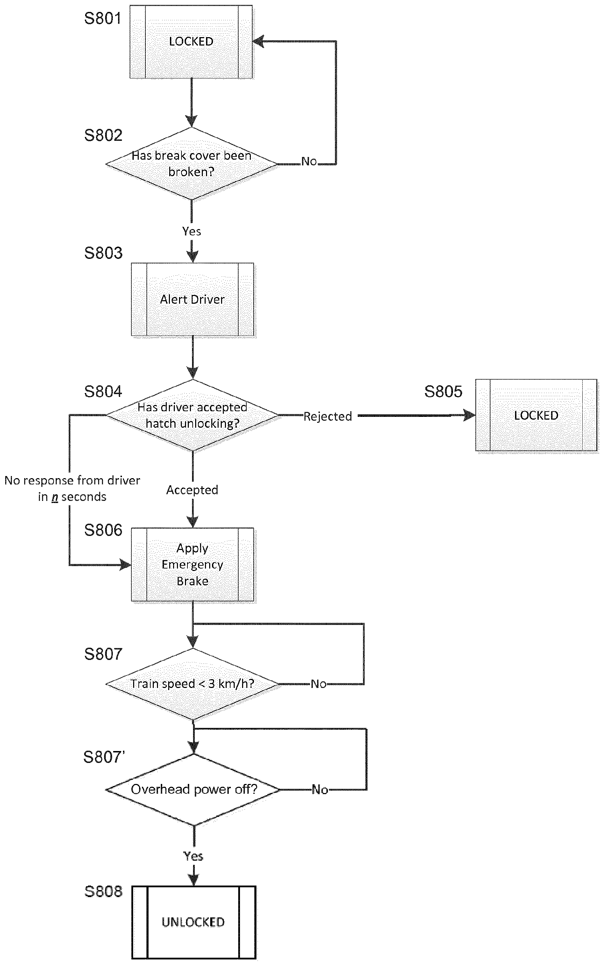

Although not shown in Figure 9, the control logic process of the control system 8 may suppress stage S808 until the control system receives confirmation that the power in an external power line (i.e. catenary line) has been isolated. Thus Figure 10 show a relay circuit of a variant control system of the train. Figure 10 is similar to Figure 7 except that a digital output No_OHP of an Overhead Power Sensor is input into a relay coil No_OHPR as the detected state of the overhead power. The digital output No_OHP is 1 if the detected state of the overhead power is off, and 0 if the detected state of the overhead power is on. If the detected state of the overhead power is on, a relay contact No_OHPR is open, whereas if the detected state of the overhead power is off, the relay contact No_OHPR is closed. Figure 11 summarises the digital output, relay and solenoid coil states for the circuit of Figure 10, and Figure 12 shows a flowchart of the control logic of the variant control system, which is similar to Figure 9 except that at S807' the variant control system detects the state of the overhead power, and only if the detected state of the overhead power is off will the control logic process move to S808 in which the control system 8 generates the release signal for the hatch to be opened.

After an emergency, the roof hatch 2 may be reused by closing the access panel 14 and moving the locally-controlled locking device into its closed state. Additionally, the handle cover 4 may be replaced. The control system 8 is configured to transition the remotely-controlled locking device into its closed state upon receipt of a signal from the interface unit 13 indicating that the driver or the guard considers the emergency to be over.

Although not shown in Figures 1 and 5, the train 100 may have an emergency power supply for powering the remotely-controlled locking devices, the control system 8 and the interface unit 13 if a main power supply to the train is lost.

Although described above in relation to a multi-carriage train, the present disclosure has applicability to any vehicle capable of carrying passengers, although especially rail-mounted vehicles, such as trains, locomotives, metros, monorails, etc.

While the present disclosure has been described in conjunction with the exemplary embodiments described above, many modifications and variations within the scope of the appended claims will be apparent to those skilled in the art when given this disclosure. Accordingly, the exemplary embodiments of the present disclosure set forth above are considered to be illustrative and not limiting.

## Claims

1. A passenger-carrying, rail-mounted vehicle (100) powered from an overhead electrical power line, and having a roof hatch (2) in a roof of the vehicle for passenger emergency escape therethrough, **characterised in that**
the roof hatch includes a remotely-controlled locking device (3) having a closed state preventing opening of the roof hatch (2) and a released state allowing opening of the roof hatch, and the vehicle further has a control system (8) configured to control the operation of the remotely-controlled locking device;
the remotely-controlled locking device (3) remains in its closed state until receipt of a release signal generated by the control system (8),
the control system (8) suppresses the generation of the release signal until it receives confirmation that power in the overhead power line is cut, and
the vehicle further has a user interface (13) configured to allow interaction between a driver or guard of the vehicle and the control system (8), wherein the release signal is generated by the control system upon receipt thereby of an unlock signal from the user interface, the unlock signal indicating that the driver or guard allows transition of the remotely-controlled locking device (3) from its closed state into its released state.

2. The rail-mounted vehicle of claim 1, wherein the control system is configured to command an emergency brake control to reduce the speed of the vehicle upon receipt by the control system (8) of the unlock signal.

3. The rail-mounted vehicle of claim 1 or 2, wherein the roof hatch (2) further includes a locally-controlled locking device having a closed state preventing opening of the roof hatch and a released state allowing opening of the roof hatch, wherein the locally-controlled locking device is movable into its released state by a passenger of the vehicle wanting to exit through the roof hatch.

4. The rail-mounted vehicle of any preceding claim, further having a locally-controlled locking device having a closed state preventing opening of the roof hatch (2) and a released state allowing opening of the roof hatch, wherein:
the locally-controlled locking device is movable into its released state by a passenger of the vehicle wanting to exit through the roof hatch (2); and
the control system is configured to trigger a prompt to the user interface (13) upon detection of an attempt to move the locally-controlled locking device into its released state.

5. The rail-mounted vehicle of claim 4, wherein the prompt requests a user feedback from the user interface (13) to the control system (8), the feedback being or including either the unlock signal indicating that the driver or guard allows transition of the remotely-controlled locking device (3) from its closed state to its released state, or a prevention signal indicating that the driver or guard prevents transition of the remotely-controlled locking device from its closed state to its released state.

6. The rail-mounted vehicle of claim 5, wherein the control system (8) is configured such that if it does not receive the user feedback from the user interface within a predetermined time period from the attempt to move the locally-controlled locking device to its released state, the control system generates the release signal.

7. The rail-mounted vehicle of claim 5 or claim 6, wherein the control system (8) is configured such that if it does not receive the user feedback from the user interface (13) within the predetermined time period from the attempt to move the locally-controlled locking device to its released state, the control system commands an emergency brake control to reduce the speed of the vehicle.

8. The rail-mounted vehicle of any of claims 4 to 7, wherein the locally-controlled locking device comprises a handle (1) which is operable to move the locally-controlled locking device between its closed state and its released state, and a handle cover (4) which is arranged such that the handle cover must be broken or removed by a passenger to permit operation of the handle.

9. The rail-mounted vehicle of any preceding claim, wherein the roof hatch (2) is hinged along a side thereof, and the hinged hatch is configured to swing open towards an inside of the vehicle.

10. A passenger emergency escape roof hatch system for installing in a passenger-carrying, rail-mounted vehicle powered from an overhead electrical power line, the system having the roof hatch (2), the control system (8) and the user interface (13) of any one of claims 1 to 9.

## Patentansprüche

1. Passagiertransport-Schienenfahrzeug (100), das über eine elektrische Oberleitung angetrieben wird und eine Dachluke (2) in einem Dach des Fahrzeugs für einen Notausstieg der Passagiere durch dieses hindurch aufweist, **dadurch gekennzeichnet, dass**
die Dachluke eine ferngesteuerte Verriegelungsvorrichtung (3) mit einem geschlossenen Zustand, der das Öffnen der Dachluke (2) verhindert, und einem freigegebenen Zustand, der das Öffnen der Dachluke ermöglicht, umfasst, wobei das Fahrzeug weiters ein Steuersystem (8) aufweist, das ausgelegt ist, um den Betrieb der ferngesteuerten Verriegelungsvorrichtung zu steuern;
die ferngesteuerte Verriegelungsvorrichtung (3) im geschlossenen Zustand bleibt, bis sie ein vom Steuersystem (8) erzeugtes Freigabesignal empfängt,
das Steuersystem (8) die Erzeugung des Freigabesignals unterdrückt, bis es eine Bestätigung empfängt, dass der Strom in der Oberleitung unterbrochen ist, und
das Fahrzeug weiters eine Benutzerschnittstelle (13) aufweist, die ausgelegt ist, um eine Interaktion zwischen einem Fahrer oder Schaffner des Fahrzeugs und dem Steuersystem (8) zu ermöglichen, wobei das Freigabesignal durch das Steuersystem erzeugt wird, wenn es ein Entriegelungssignal von der Benutzerschnittstelle empfängt, wobei das Entriegelungssignal anzeigt, dass der Fahrer oder Schaffner einen Übergang der ferngesteuerten Verriegelungsvorrichtung (3) vom geschlossenen in den freigegebenen Zustand erlaubt.

2. Schienenfahrzeug nach Anspruch 1, wobei das Steuersystem ausgelegt ist, einer Notbremssteuerung zu befehlen, die Geschwindigkeit des Fahrzeugs zu verringern, wenn das Steuersystem (8) das Entriegelungssignal empfängt.

3. Schienenfahrzeug nach Anspruch 1 oder 2, wobei die Dachluke (2) weiters eine lokal gesteuerte Verriegelungsvorrichtung mit einem geschlossenen Zustand, der das Öffnen der Dachluke verhindert, und einem freigegebenen Zustand, der das Öffnen der Dachluke ermöglicht, umfasst, wobei die lokal gesteuerte Verriegelungsvorrichtung von einem Passagier des Fahrzeugs, der dieses durch die Dachluke verlassen möchte, in den freigegebenen Zustand bewegt werden kann.

4. Schienenfahrzeug nach einem der vorangegangenen Ansprüche, das weiters eine lokal gesteuerte Verriegelungsvorrichtung mit einem geschlossenen Zustand, der das Öffnen der Dachluke (2) verhindert, und einem freigegebenen Zustand, der das Öffnen der Dachluke ermöglicht, umfasst, wobei:
die lokal gesteuerte Verrieglungsvorrichtung von einem Passagier des Fahrzeugs, der dieses durch die Dachluke (2) verlassen möchte, in den freigegebenen Zustand bewegt werden kann; und
das Steuersystem ausgelegt ist, einen Hinweis an die Benutzerschnittstelle (13) auszulösen, wenn es einen Versuch zur Bewegung der lokal gesteuerten Verriegelungsvorrichtung in ihren freigegebenen Zustand detektiert.

5. Schienenfahrzeug nach Anspruch 4, wobei der Hinweis ein Benutzerfeedback von der Benutzerschnittstelle (13) an das Steuersystem (8) erfordert, wobei das Feedback entweder das Entriegelungssignal, das anzeigt, dass der Fahrer oder Schaffner einen Übergang der ferngesteuerten Verriegelungsvorrichtung (3) von ihrem geschlossenen Zustand in ihren freigegebenen Zustand erlaubt, oder ein Verhinderungssignal ist oder umfasst, das anzeigt, dass der Fahrer oder Schaffner den Übergang der ferngesteuerten Verriegelungsvorrichtung von ihrem geschlossenen Zustand in ihren freigegebenen Zustand verhindert.

6. Schienenfahrzeug nach Anspruch 5, wobei das Steuersystem (8) so ausgelegt ist, dass, wenn es nicht innerhalb eines vorbestimmten Zeitraums nach dem Versuch, die lokal gesteuerte Verriegelungsvorrichtung in ihren freigegebenen Zustand zu bewegen, das Benutzerfeedback von der Benutzerschnittstelle empfängt, das Steuersystem das Freigabesignal erzeugt.

7. Schienenfahrzeug nach Anspruch 5 oder Anspruch 6, wobei das Steuersystem (8) so ausgelegt ist, dass, wenn es nicht innerhalb des vorbestimmten Zeitraums nach dem Versuch, die lokal gesteuerte Verriegelungsvorrichtung in ihren freigegebenen Zustand zu bewegen, das Benutzerfeedback von der Benutzerschnittstelle (13) empfängt, das Steuersystem einer Notbremssteuerung befiehlt, die Geschwindigkeit des Fahrzeugs zu verringern.

8. Schienenfahrzeug nach einem der Ansprüche 4 bis 7, wobei die lokal gesteuerte Verriegelungsvorrichtung einen Griff (1), der betätigbar ist, um die lokal gesteuerte Verriegelungsvorrichtung zwischen ihrem geschlossenen Zustand und ihrem freigegebenen Zustand zu bewegen, und eine Griffabdeckung (4) umfasst, die so angeordnet ist, dass die Griffabdeckung von einem Passagier gebrochen oder entfernt werden muss, um die Betätigung des Griffs zu ermöglichen.

9. Schienenfahrzeug nach einem der vorangegangenen Ansprüche, wobei die Dachluke (2) an einer ihrer Seiten angelenkt ist und die angelenkte Luke ausgelegt ist, um zur Innenseite des Fahrzeugs hin aufgeklappt zu werden.

10. Passagiernotausstiegsdachlukensystem zum Einbau in ein Passagiertransport-Schienenfahrzeug, das über eine elektrische Oberleitung angetrieben wird, wobei das System eine Dachluke (2), ein Steuersystem (8) und eine Benutzerschnittstelle (13) nach einem der Ansprüche 1 bis 9 umfasst.

## Revendications

1. Véhicule monté sur rails, transportant des passagers (100) alimenté par une ligne d'alimentation électrique aérienne, et ayant une trappe de toit (2) dans un toit du véhicule pour l'évacuation d'urgence de passagers à travers celle-ci, **caractérisé en ce que**
la trappe de toit comprend un dispositif de verrouillage télécommandé (3) ayant un état fermé empêchant l'ouverture de la trappe de toit (2) et un état libéré permettant l'ouverture de la trappe de toit, et le véhicule a en outre un système de commande (8) configuré pour commander le fonctionnement du dispositif de verrouillage télécommandé ;
le dispositif de verrouillage télécommandé (3) reste dans son état fermé jusqu'à réception d'un signal de libération généré par le système de commande (8),
le système de commande (8) supprime la génération du signal de libération jusqu'à ce qu'il reçoive la confirmation que l'alimentation dans la ligne d'alimentation aérienne est coupée, et
le véhicule comporte en outre une interface utilisateur (13) configurée pour permettre une interaction entre un conducteur ou un contrôleur du véhicule et le système de commande (8), dans lequel le signal de libération est généré par le système de commande lors de la réception par celui-ci d'un signal de déverrouillage provenant de l'interface utilisateur, le signal de déverrouillage indiquant que le conducteur ou le contrôleur autorise la transition du dispositif de verrouillage télécommandé (3) de son état fermé à son état libéré.

2. Véhicule monté sur rails selon la revendication 1, dans lequel le système de commande est configuré pour ordonner une commande de freinage d'urgence pour réduire la vitesse du véhicule lors de la réception par le système de commande (8) du signal de déverrouillage.

3. Véhicule sur rails selon la revendication 1 ou 2, dans lequel la trappe de toit (2) comprend en outre un dispositif de verrouillage à commande locale ayant un état fermé empêchant l'ouverture de la trappe de toit et un état libéré autorisant l'ouverture de la trappe de toit, dans lequel le dispositif de verrouillage à commande locale peut être commuté dans son état libéré par un passager du véhicule voulant sortir par la trappe de toit.

4. Véhicule monté sur rails selon l'une quelconque des revendications précédentes, comportant en outre un dispositif de verrouillage à commande locale ayant un état fermé empêchant l'ouverture de la trappe de toit (2) et un état libéré permettant l'ouverture de la trappe de toit, dans lequel :
le dispositif de verrouillage à commande locale peut être commuter dans son état libéré par un passager du véhicule voulant sortir par la trappe de toit (2) ; et
le système de commande est configuré pour déclencher une invite à l'interface utilisateur (13) lors de la détection d'une tentative de commutation du dispositif de verrouillage à commande locale dans son état libéré.

5. Véhicule monté sur rails selon la revendication 4, dans lequel l'invite demande un retour utilisateur de l'interface utilisateur (13) au système de commande (8), le retour étant ou comprenant le signal de déverrouillage indiquant que le conducteur ou le contrôleur autorise la transition du dispositif de verrouillage télécommandé (3) de son état fermé à son état libéré, ou un signal d'interdiction indiquant que le conducteur ou le contrôleur empêche une transition du dispositif de verrouillage télécommandé de son état fermé à son état libéré.

6. Véhicule monté sur rails selon la revendication 5, dans lequel le système de commande (8) est configuré de sorte que s'il ne reçoit pas le retour utilisateur depuis l'interface utilisateur dans une période de temps prédéterminée à partir de la tentative de commutation du dispositif de verrouillage à commande locale dans son état libéré, le système de commande génère le signal de libération.

7. Véhicule monté sur rails selon la revendication 5 ou la revendication 6, dans lequel le système de commande (8) est configuré de sorte que s'il ne reçoit pas le retour utilisateur depuis l'interface utilisateur (13) dans la période de temps prédéterminée à partir de la tentative de commutation du dispositif de verrouillage à commande locale dans son état libéré, le système de commande ordonne une commande de freinage d'urgence pour réduire la vitesse du véhicule.

8. Véhicule monté sur rails selon l'une quelconque des revendications 4 à 7, dans lequel le dispositif de verrouillage à commande locale comprend une poignée (1) qui est actionnable pour commuter le dispositif de verrouillage à commande locale entre son état fermé et son état libéré, et un couvercle de poignée (4) qui est agencé de sorte que le couvercle de poignée doit être cassé ou retiré par un passager pour permettre l'utilisation de la poignée.

9. Véhicule monté sur rails selon l'une quelconque des revendications précédentes, dans lequel la trappe de toit (2) est articulée le long d'un côté de celle-ci, et la trappe articulée est configurée pour s'ouvrir en pivotant vers un intérieur du véhicule.

10. Système de trappe de toit d'évacuation d'urgence de passagers destiné à être installé dans un véhicule monté sur rails, transportant des passagers alimenté par une ligne d'alimentation électrique aérienne, le système ayant la trappe de toit (2), le système de commande (8) et l'interface utilisateur (13) selon l'une quelconque des revendications 1 à 9.
